# EUROPEAN PATENT APPLICATION

(11) **EP 4 481 192 A1**
(43) Date of publication of application: **25.12.2024**
(21) Application number: 23180208.3
(22) Date of filing: 20.06.2023
(51) Int. Cl.: F03D 9/19, F03D 13/20, F03D 80/60, C25B 1/04

(54) **PLATFORM SYSTEM AND WIND TURBINE**

(71) Applicant: Siemens Gamesa Renewable Energy A/S, 7330 Brande (DK)
(72) Inventor: Ellgaard, Jonas Balslev, 7330 Brande (DK); Jensen, Brian, 7330 Brande (DK)
(74) Representative: SGRE-Association

(57) **Abstract**

The present invention relates to a platform system (1) for a wind turbine (2), comprising a base platform (3) for being attached to a tower (4) of the wind turbine (2) and an electrochemical production system (5) with an electrochemical production unit (6) for converting a first chemical product together with electricity into a second chemical product, a housing (7) for protecting the electrochemical production unit (6) from environmental influences and a cooling system (8) with an air cooling radiator (9) for cooling the electrochemical production unit (6). The base platform (3) comprises a surrounding platform edge (10), wherein the air cooling radiator (9) is arranged at the platform edge (10). The invention further relates to a wind turbine (2).

## Description

The present invention relates to a platform system of a wind turbine. The invention also relates to a wind turbine with a respective platform system.

Wind energy is a regenerative and, however, volatile energy source. Wind turbines for converting wind energy into electrical energy need a wind speed above a certain minimum for providing enough power for rotating a rotor and operating a generator of the wind turbine. For wind speeds above a predefined threshold, operation of the wind turbine must be suspended in order to avoid damages to the wind turbine due to critical loads.

Moreover, in periods of relatively strong winds, it might be indicated that the power generated by the wind turbine has to be reduced in order to avoid peaks in the power frequency of the power grid that the wind turbine is feeding to. In other words, the wind turbine is deliberately forced to generate less electrical power than it potentially could produce at the present wind speed.

Beyond that, in no wind phases, it may be necessary that electric energy has to be obtained from the power grid to avoid longer standstill periods of the rotor and damages to rotor bearings. Since availability of electric energy in no wind phases is usually relatively low, the drain of additional electric energy from the power grid is disadvantageous.

Due to these setbacks, there is a growing demand for increasing the overall efficiency of the wind turbine by storing at least a part of the energy produced by the wind turbine in an energy storage system. For this purpose, different energy storage systems have been applied, such as electrical energy storage systems, mechanical energy storage systems or chemical energy storage systems.

Chemical energy storage systems are also denoted as "power to X" systems, wherein "X" is a variable for a chemical product, such as H₂, NH₃ or the like, which is produced by means of electric energy and one or more other chemical products, such as H₂O, CO₂, N₂ or the like. The produced chemical product can be, e.g., stored in a tank or transferred through a pipeline and can be used for producing electrical energy at a later time, e.g., when the availability of regenerative electrical energy is lower than the demand.

According to present solutions, electric energy produced by offshore wind farms is transferred to a land-based chemical energy storage system for being converted into a chemical product. This has the disadvantage that a lot of space has to be provided at the land site for the chemical energy storage system and necessary cooling systems. Moreover, especially at peak production levels of regenerative electrical energy, the power lines from the offshore wind farm to the power grid are heavily used and need to be designed accordingly. Both setbacks cause additional costs.

It is therefore the object of the present invention to eliminate or at least partially eliminate the disadvantages described above in the case of an electrochemical production system for a platform system of a wind turbine. In particular, it is the object of the present invention to create an electrochemical production system for a platform system of a wind turbine, a platform system for a wind turbine and a wind turbine, which avoids the waste of space for an electrochemical production system and/or facilitate a lighter power line design in a simple and inexpensive manner.

The above object is achieved by the claims. Accordingly, the problem is solved by a platform system for a wind turbine with the features of the independent claim 1 and by a wind turbine with the features of the subordinate claim 15. Further features and details of the invention emerge from the subclaims, the description and the drawings. Features and details that are described in connection with the platform system according to the invention naturally also apply in connection with the wind turbine and vice versa, so that with regard to the disclosure of the individual aspects of the invention, reference is or can always be made to each other.

According to a first aspect of the invention, the object is achieved by a platform system for a wind turbine. The platform system comprises a base platform for being attached to a tower of the wind turbine. The platform system further comprises an electrochemical production system with an electrochemical production unit for converting a first chemical product together with electricity into a second chemical product, a housing for protecting the electrochemical production unit from environmental influences and a cooling system with an air cooling radiator for cooling the electrochemical production unit. The base platform comprises a surrounding platform edge, wherein the air cooling radiator is arranged at the platform edge.

The electrochemical production unit of the electrochemical production system is configured for converting a first chemical product, such as water, carbon dioxide, nitrogen or the like, together with electricity, generated by the wind turbine, especially an offshore wind turbine, into a second chemical product, such as hydrogen, ammonia or the like. The electrochemical production unit can be configured for producing one or more intermediate chemical products before the second chemical product is obtained. Preferably, the electrochemical production unit comprises an electrical interface, such as electrical wires, an electrical plug or the like, for being electrically coupled to a power system of the wind turbine. Thus, the electricity for the conversion process of the electrochemical production unit can be obtained from the wind turbine, especially a generator of the wind turbine.

The housing is configured for protecting the electrochemical production unit from environmental influences, such as wind, rain, dust, salt water or the like. The housing can comprise metal, especially stainless, coated or the like. Preferably, the housing is box-shaped, like a freight container, wherein the dimensions of the housing can differ from a standard 20 ft. or 40 ft. container. Preferably, the housing has one or more cooling openings, such as cooling slots or the like. Preferably, the cooling opening are provided with a lamella to prevent rain from getting into the housing. The housing is configured to stand on top of a base platform of the platform system.

The cooling system is configured for cooling the electrochemical production unit. For this purpose, the cooling system comprises the air cooling radiator. Within the patent application, an air cooling radiator is a radiator for providing heat exchange with surrounding air, especially air which flows through the air cooling radiator, and thereby cooling a cooling fluid of the air cooling radiator for providing cold for the electrochemical production system to cool down the electrochemical production unit. For this purpose, the cooling fluid can be pumped through the air cooling radiator and the electrochemical production system.

The base platform comprises the surrounding platform edge. The platform edge constitutes a limitation of the base platform. In other words, the base platform is horizontally limited by the platform edge. The air cooling radiator is arranged at the platform edge. This means that the air cooling radiator can be arranged above the platform edge or adjacent to the platform edge, e.g., spaced apart from the platform edge with less than 50 cm, preferably less than 20 cm. Therefore, the air cooling radiator can be arranged above the base platform or aside the base platform. Preferably, between the housing and the air cooling radiator, a service area for a maintenance worker is provided. The service area can comprise a maintenance corridor for walking and working along the air cooling radiator and the housing or the like. Thus, maintenance of the electrochemical production system and the cooling system is improved.

A platform system according to the invention has the advantage over platform systems that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced. By arranging the air cooling radiator at the platform edge, no or only little deck space of the base platform is occupied by the cooling system. This provides a better access to the housings, e.g., for maintenance worker.

According to a preferred further development of the invention, the air cooling radiator is fixed to the platform edge by a fixation device. The fixation device is configured for holding the air cooling radiator at its position. This means that the fixation device must be designed strong enough to withstand vibrations, strong winds and other environmental influences to ensure a safe fixation of the air cooling radiator at its location and to prevent the air cooling radiator from falling off the base platform. The fixation device can comprise one or more screws and/or nuts, one or more fixation brackets, one or more holding structures, e.g., frames, half frames, portals or the like, a combination thereof or the like. Preferably the air cooling radiator is arranged removably at the base platform, e.g., by unscrewing a screw of the fixation device or the like. This has the advantage that in a simple and inexpensive way, a secure arrangement of the air cooling radiator at the base platform is provided. Thus, a predetermined relative position of the air cooling radiator to the electrochemical production unit can be ensured.

It is preferred that the fixation device is accessible from a service area of the base platform, wherein the service area is arranged between the air cooling radiator and the electrochemical production unit. Preferably, a distance between the air cooling radiator and the housing is between 50 cm and 200 cm, more preferred between 100 cm and 150 cm. Thus, a service area is provided, which enables easy access for the maintenance worker to the fixation device, e.g., in order for replacing a broken air cooling radiator. This has the advantage that in a simple and inexpensive way, a secure installation and replacement of the air cooling radiator is provided.

Preferably, the air cooling radiator constitutes an outer boundary barrier of the base platform. Within the limits of this invention, an outer boundary barrier is considered as a device for supporting people from involuntarily falling off the base platform. For providing this function, it is preferred that the stability and/or height of the air cooling radiator is in compliance with EN standards for outer boundary rails for offshore platforms, especially for wind turbines. In case a part of the platform edge is not provided with an air cooling radiator, it is preferred that an outer boundary rail is provided for preventing people to fall off the base platform. This has the advantage that in a simple and inexpensive way, a security feature of the platform system is provided by the air cooling radiator.

It is preferred, according to the invention, that the air cooling radiator is attached to an outer boundary rail of the base platform. Preferably, the outer boundary rail covers the platform edge completely to provide security around the whole base platform. The outer boundary rail is preferably designed for holding the air cooling radiator securely in place, especially during operation of the air cooling radiator, strong winds or the like. Therefore, it is preferred that the outer boundary rail is configured to comply with EN standards for outer boundary rails for offshore platforms, especially for wind turbines. This has the advantage that in a simple and inexpensive way, the assembly of the air cooling radiator can be improved. Moreover, security of the platform system is increased because, even with the air cooling radiator removed, an outer boundary rail is provided at the platform edge.

More preferred, the outer boundary rail is located between the air cooling radiator and the electrochemical production unit. In other words, a maintenance area between the outer boundary rail and the housing is always provided, even with the air cooling radiator attached to the outer boundary rail. By attaching the air cooling radiator to a sea facing side of the outer boundary rail, the size of the maintenance area is maximized. This has the advantage that in a simple and inexpensive way, the assembly and maintenance of the air cooling radiator and the electrochemical production system can be improved.

Preferably, a radiator height of the air cooling radiator with respect to the base platform is the same or less than a housing height of the housing with respect to the base platform. This means that the housing has a maximum height level, which is higher than a maximum total height level of the air cooling radiator. By these means, a collision of the rotor blades with the air cooling radiator during operation of the wind turbine can be avoided. This has the advantage that in a simple and inexpensive way, a vertical distance of the base platform to the nacelle can be reduced.

It is further preferred that the air cooling radiator comprises an attachment device for attaching a lifting adapter of a crane. The attachment device can be configured as a hook, eye, loop, ring or the like. Moreover, the attachment device can be fixedly attached or hinged to the air cooling radiator. Preferably, the attachment device is located at a top side of the air cooling radiator. It is further preferred that at least two attachment devices are provided for ensuring secure handling when hooked to the crane. This has the advantage that in a simple and inexpensive way, the assembly and maintenance of the air cooling radiator can be improved.

In a particularly preferred embodiment, a plurality of air cooling radiators is distributed side by side at the platform edge. Preferably, the cooling radiators are arranged side by side in one row along the platform edge. Thus, at least over a segment of the platform edge, a continuous wall of air cooling radiators is provided. This has the advantage that in a simple and inexpensive way, a large cooling action can be provided for the electrochemical production system.

Preferably, adjacent air cooling radiators are mutually interconnected by a fixation device. Preferably, this fixation device is accessible from the maintenance area. This has the advantage that in a simple and inexpensive way, the stability of the air cooling radiator arrangement can be further improved.

It is preferred that fluid connectors for a cooling fluid system are located at a bottom side of the air cooling radiator. Thus, fluid can be easier evacuated from the air cooling radiator, supported by gravity. Further preferred, the fluid connectors are accessible from the maintenance area, in order to facilitate assembly and maintenance operations. This has the advantage that in a simple and inexpensive way, the assembly and maintenance of the air cooling radiator can be improved.

According to a preferred embodiment of the invention, the cooling system comprises a fan unit for providing an air stream through the air cooling radiator towards the housing. The fan unit can be attached to the base platform. For attaching the fan unit, removable fixation means are preferred. With the fan unit, an air stream for providing heat exchange can be provided even when the wind direction is not optimal. Thus, a dependency from the wind direction and wind speed can be eliminated. This has the advantage that in a simple and inexpensive way, the operation and effect of the air cooling radiator can be further improved.

It is further preferred that the fan unit is arranged at the air cooling radiator between the air cooling radiator and the housing. Preferably, the fan unit is fixedly attached to the air cooling radiator, especially by fixation means. This has the advantage that in a simple and inexpensive way, the operation and effect of the air cooling radiator can be further improved.

Preferably, the cooling system comprises an air guide fin for guiding the air stream with respect to the air cooling radiator. More preferred, a plurality of air guide fins are provided. It is preferred that the air guide fin can be arranged for improving an equally distributed air stream through the air cooling radiator. This has the advantage that in a simple and inexpensive way, the operation and effect of the air cooling radiator can be further improved.

According to a third aspect of the invention, the object is achieved by a wind turbine. Preferably, the wind turbine is configured as an offshore wind turbine. The wind turbine comprises a tower, a foundation, a nacelle, a rotor, a generator and a plurality of wind turbine blades, preferably three wind turbine blades. According to the invention, a platform system is attached to the tower at an intermediate section of the tower between the foundation and the nacelle.

The wind turbine according to the invention has all the advantages that have already been described for an electrochemical production system according to the first aspect of the invention and for a platform system according to the second aspect of the invention. Accordingly, the wind turbine according to the invention has the advantage over conventional wind turbines, that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced. By arranging the air cooling radiator at the platform edge, no or only little deck space of the base platform is occupied by the cooling system. This provides a better access to the housings, e.g., for maintenance worker.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a wind turbine according to a preferred embodiment of the invention,
Figure 2 shows a schematic perspective view of a platform system according to a preferred embodiment of the invention,
Figure 3 shows a schematic side view of a platform system according to a preferred embodiment of the invention,
Figure 4 shows a schematic front view of a cooling system of a platform system according to a preferred embodiment of the invention, and
Figure 5 shows a schematic top view of a platform system according to a preferred embodiment of the invention.

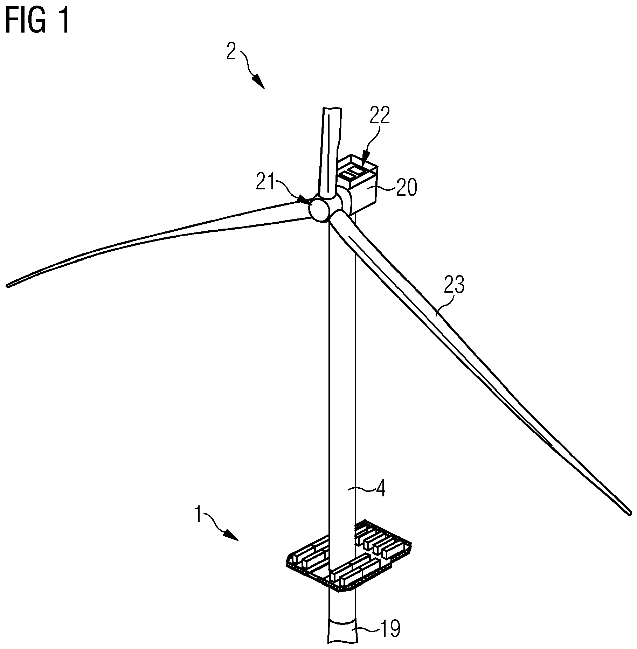

Elements with the same function and effectiveness are denoted each in figures 1 to 5 with the same reference numbers.

In fig. 1, a wind turbine 2 according to a preferred embodiment of the invention is shown in a schematic perspective view. The wind turbine 2 comprises a tower 4, extending from a foundation 19. On the top of the tower 4, a nacelle 20 is mounted. The nacelle 20 houses a generator 22. Furthermore, a rotor 21 with three wind turbine blades 23 is arranged at the nacelle 20. In an intermediate section of the tower 4 between the foundation 19 and the nacelle 20, a platform system 1 according to the invention is mounted such that during rotation of the rotor 21, a collision between the wind turbine blades 23 and the platform system 1 is avoided.

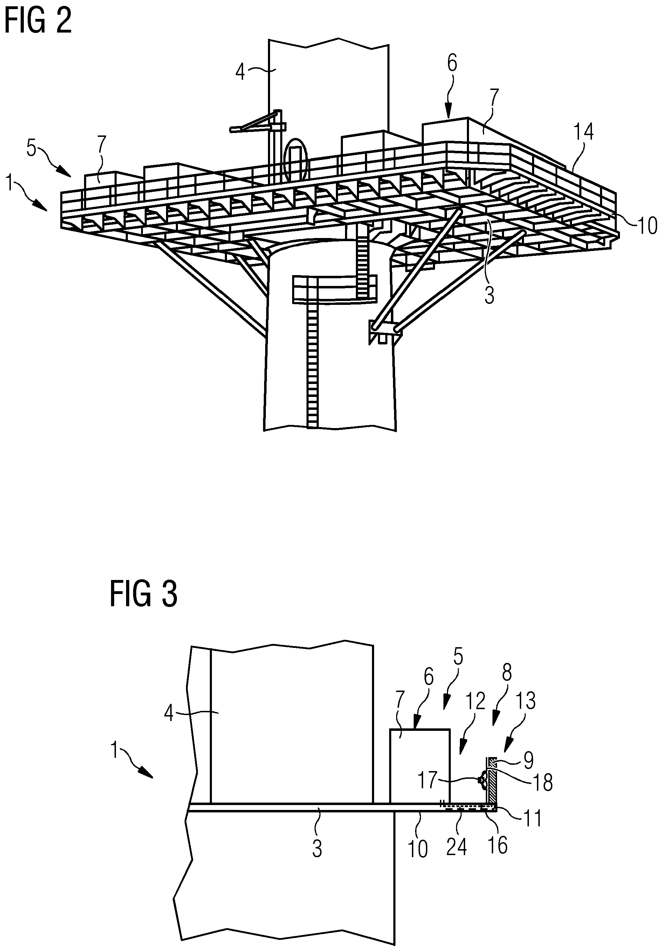

Fig. 2 shows a platform system 1 according to a preferred first embodiment of the invention in a schematic perspective view. The platform system 1 comprises a base platform 3 attached to a tower 4. A circumference of the base platform 3 is restricted by a platform edge 10. At the platform edge 10, an outer boundary rail 14 is provided for preventing people to fall off the base platform 3 and as an installation means for a not illustrated cooling system 8 (cf. fig. 3). On the base platform 3, an electrochemical production system 5 with several electrochemical production units 6 is provided. Each electrochemical production unit 6 is located within a housing 7.

In fig. 3, a platform system 1 according to a preferred embodiment of the invention is shown in a schematic side view. In this figure, the cooling system 8 is illustrated. The cooling system 8 comprises an air cooling radiator 9, attached to the base platform 3 next to the platform edge 10 by a fixation device 11. At a side of the air cooling radiator 9 facing the housing 7, a fan unit 17 is attached to the air cooling radiator 9. The cooling system 8 further comprises an air guide fin 18 for guiding air from the fan unit 17 towards the air cooling radiator 9.

At a bottom side of the air cooling radiator 9, a fluid connector 16 for a cooling fluid circuit 24 for cooling the electrochemical production unit 6 is provided. For cooling the electrochemical production unit 6, the cooling circuit 24 is guided into the housing 7. The air cooling radiator 9 constitutes a segment of an outer boundary barrier 13 to prevent people to fall of the base platform 3. Between the cooling system 8 and the housing 7 a service area 12 for maintenance worker is provided.

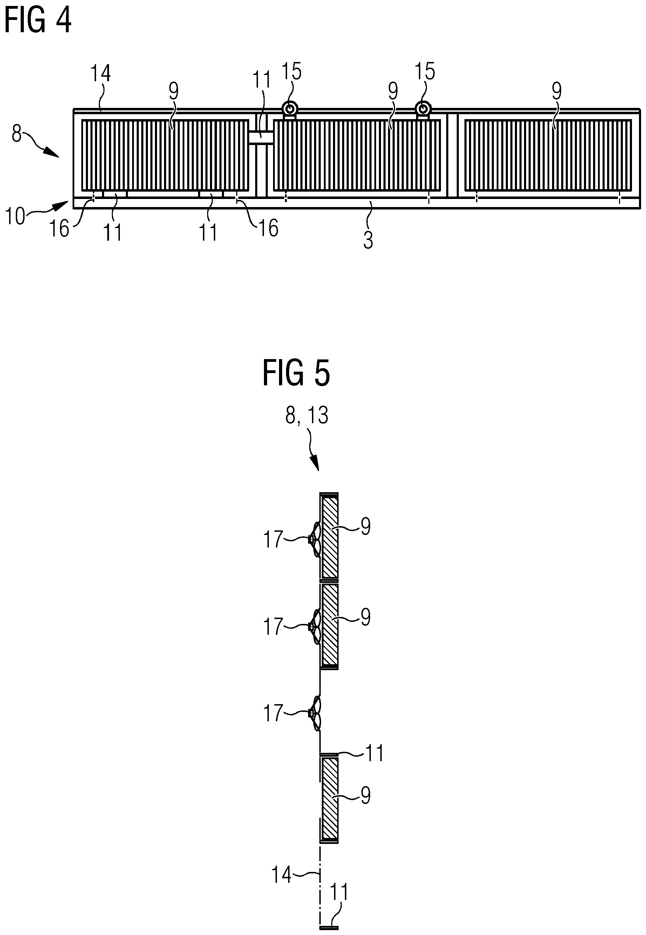

Fig. 4 shows a cooling system 8 of a platform system 1 according to a preferred embodiment of the invention in a schematic front view. The cooling system 8 comprises a plurality of air cooling radiators 9, arranged in lines side by side along the platform edge 10. The fluid connectors 16 are arranged at a bottom side of the air cooling radiators 9, facing downwards.

Some air cooling radiators 9 are mutually interconnected by a fixation device 11. Alternatively or additionally, the air cooling radiators 9 can be fixed at the outer boundary rail 14 by the fixation device 11. An air cooling radiator 9 is provided with two attachment devices 15 for attaching a hook of a crane for better assembly and disassembly of the air cooling radiator 9. An air cooling device 9 is fixed to the base platform 3 by a fixation device 11. The arrangement of the fixation devices 11 is just for demonstrational purposes. According to the invention, the fixation devices 11 can be arranged at other locations. Furthermore, more or less fixation devices 11 can be provided.

In Fig. 5, a platform system 1 according to a preferred embodiment of the invention is shown in a schematic top view. In this figure, some components of the cooling system 8 have been removed. In two adjacent segments, an air cooling radiator 9 with a fan unit 17 is arranged. In an adjacent segment, the air cooling radiator 9 is removed, wherein the fan unit 17 is still present. In an adjacent segment, the fan unit 17 is removed, wherein the air cooling radiator 9 is still present. In an adjacent segment, the air cooling radiator 9 and the fan unit 17 are removed. In all segments, the outer boundary rail 14 is present to prevent people to fall off the base platform 3.

## Claims

1. Platform system (1) for a wind turbine (2), comprising a base platform (3) for being attached to a tower (4) of the wind turbine (2) and an electrochemical production system (5) with an electrochemical production unit (6) for converting a first chemical product together with electricity into a second chemical product, a housing (7) for protecting the electrochemical production unit (6) from environmental influences and a cooling system (8) with an air cooling radiator (9) for cooling the electrochemical production unit (6), wherein the base platform (3) comprises a surrounding platform edge (10), wherein the air cooling radiator (9) is arranged at the platform edge (10).

2. Platform system (1) according to claim 1,
**characterized in**
**that** the air cooling radiator (9) is fixed to the platform edge (10) by a fixation device (11).

3. Platform system (1) according to claim 2,
**characterized in**
**that** the fixation device (11) is accessible from a service area (12) of the base platform (3), wherein the service area (12) is arranged between the air cooling radiator (9) and the electrochemical production unit (6).

4. Platform system (1) according to any of the previous claims,
**characterized in**
**that** the air cooling radiator (9) constitutes an outer boundary barrier (13) of the base platform (3).

5. Platform system (1) according to any of the previous claims,
**characterized in**
**that** the air cooling radiator (9) is attached to an outer boundary rail (14) of the base platform (3).

6. Platform system (1) according to claim 5,
**characterized in**
**that** the outer boundary rail (14) is located between the air cooling radiator (9) and the electrochemical production unit (6).

7. Platform system (1) according to any of the previous claims,
**characterized in**
**that** a radiator height of the air cooling radiator (9) with respect to the base platform (3) is the same or less than a housing height of the housing (7) with respect to the base platform (3).

8. Platform system (1) according to any of the previous claims,
**characterized in**
**that** the air cooling radiator (9) comprises an attachment device (15) for attaching a lifting adapter of a crane.

9. Platform system (1) according to any of the previous claims,
**characterized in**
**that** a plurality of air cooling radiators (9) is distributed side by side at the platform edge (10).

10. Platform system (1) according to claim 9,
**characterized in**
**that** adjacent air cooling radiators (9) are mutually interconnected by a fixation device (11).

11. Platform system (1) according to any of the previous claims,
**characterized in**
**that** fluid connectors (16) for a cooling fluid system are located at a bottom side of the air cooling radiator (9).

12. Platform system (1) according to any of the previous claims,
**characterized in**
**that** the cooling system (8) comprises a fan unit (17) for providing an air stream through the air cooling radiator (9) towards the housing (7).

13. Platform system (1) according to claim 12,
**characterized in**
**that** the fan unit (17) is arranged at the air cooling radiator (9) between the air cooling radiator (9) and the housing (7).

14. Platform system (1) according to claim 12 or 13,
**characterized in**
**that** the cooling system (8) comprises an air guide fin (18) for guiding the air stream with respect to the air cooling radiator (9).

15. Wind turbine (2), comprising a tower (4), a foundation (19), a nacelle (20), a rotor (21), a generator (22) and a plurality of wind turbine blades (23),
**characterized in**
**that** a platform system (1) according to any of the previous claims is attached to the tower (4) at an intermediate section of the tower (4) between the foundation (19) and the nacelle (20).
